# EUROPEAN PATENT SPECIFICATION

(11) **EP 3 180 976 B1**
(45) Date of publication and mention of the grant of the patent: **17.11.2021**
(21) Application number: 16202964.9
(22) Date of filing: 22.11.2004
(51) Int. Cl.: A01K 1/015, B01J 20/12, B01J 20/32

(54) **COATED CLUMPING LITTER**
BESCHICHTETER VERKLUMPENDER EINSTREU
LITIÈRE AGGLOMÉRANTE REVÊTUE

(30) Priority: 01.07.2004 US 883164; 22.10.2004 EP 04025159
(43) Date of publication of application: 21.06.2017
(62) Divisional of application: 04027693.3
(73) Proprietor: Société des Produits Nestlé S.A., 1800 Vevey (CH)
(72) Inventor: Greene, Phillip B., St. Louis, MO Missouri 63118 (US); Job, James D., Kelso, MO Missouri 63758 (US); Kearbey, James Max, St. Louis, MO Missouri 63129 (US); Mauras, Cesar J., Croton-on-Hudson, NY New York 10520 (US); Marx, W. Craig, St. Louis, MO Missouri 63125 (US)
(74) Representative: Rupp, Christian

(56) References cited:
- US-A1- 2003 148 100
- US-A1- 2004 079 293

## Description

### BACKGROUND

This disclosure relates generally to absorbent materials, and more specifically to, various litter compositions used for the control and removal of animal waste.

Known lifter compositions are fabricated primarily from one of five materials: clay; vegetable matter such as grass, hay or alfalfa; wood chips, shavings or sawdust; and paper, such as shredded, flaked or pelletized paper, and Silica Gel. Known clay litters are prone to produce dust, and the tracking of this dust out of the litter pan by the animal. Further, production of such clay litters results in a large quantity of dust being produced, sometimes referred to as clay fines. Clay fines present a problem to litter manufacturers because the fines are a waste product and require disposal. In addition such clay products are not biodegradable.

US 2003/148100 A1 relates to an clumping animal litter which includes non-swelling particles and a swelling agent coated on the non-swelling particles wherein the non-swelling particles are manufactured by agglomerating clay fines.

Sodium bentonite clay is one known material used in the production of animal litters and is known for its excellent absorption and clumping qualities, as well as for odor retention. Some litter products are composed of 100% sodium bentonite. However, sodium bentonite is relatively expensive compared to other litter components. Therefore, attempts have been made to reduce the amount of sodium bentonite in clumping litters, for example, mixing pellets of non-absorbing clays with pellets of sodium bentonite clay in varying ratios. However, in these known litters, the properties which are most desirable in the sodium bentonite have been underutilized as most of the clumping and binding qualities of sodium bentonite occur at or near the surface of the clay. In 'regular' 100% bentonite litter, the granules are composed of 100% sodium bentonite. In these granules, the center typically does not swell. Therefore, in one aspect of this disclosure, a swelling agent is coated on the surface of a non-swelling seed particle. Since moisture does not typically propagate to the center of individual granules, only the surface of the granule is coated with a swelling agent, resulting in a cost effective and efficient use of the swelling agent.

### SUMMARY

The disclosure is defined by the appended claims. In particular, the invention is directed to an animal litter comprising:
non-swelling particles having a size range of about 297 microns (50 mesh) to about 2000 microns (10 mesh), said non-swelling particles being an agglomeration of particulate fines selected from the group consisting of clay, quartz, feldspar, calcium bentonite, calcite, illite, calcium carbonate, carbon, mica, Georgia white clay, hectorite, zeolite, smectite, opal, kaolinite, pumice, tobermite, slate, gypsum, vermiculite, halloysite, sepiolite, marls, diatomaceous earth, dolomite, attapulgite, montmorillonite, Monterey shale, Fuller's earth, silica, fossilized plant materials, perlites, expanded perlites, and mixtures thereof, whereby the individual particulate fines range in size from about 44 microns (325 mesh) to about 420 microns (40 mesh); and
a swelling agent having a size range of about 49 microns (300 mesh) to about 250 microns (60 mesh) coated on said non-swelling particles, said swelling agent is selected from the group consisting of bentonite, sodium bentonite, calcium bentonite, guar gum, starch, grantham gum, gum Arabic, gum acacia, silica gel, and mixtures thereof,
wherein the animal litter is obtainable by the process steps of:
   (i) mixing particulate fines of the non-swelling particles using a pinmixer with a liquid solution to produce agglomerated particles,
   (ii) screening the agglomerated particles to result non-swelling seed particles,
   (iii) coating the seed particles with a swelling agent to produce a coated product,
   (iv) discharging the coated particles,
   (v) drying the coated product and
   (vi) screening the coated product using a vibrating screen to remove particles larger than 2380 microns (8 mesh).

Additional features and advantages of the present disclosure are described in, and will be apparent from, the following Detailed Description of the disclosure and the figures.

### BRIEF DESCRIPTION OF THE FIGURES

Figure 1 is a cross sectional view of a particle of coated clumping litter.
Figure 2 is a clumping analysis of several samples of coated clumping litter.
Figure 3 shows a screen analysis, a bulk density, and a moisture content for each sample analyzed in Figure 2 .
Figure 4 shows a method of manufacturing the coated litter product of Figure 1 .

### DETAILED DESCRIPTION

Before describing the disclosure in detail, it should be understood that this disclosure is not limited to the particularly exemplified systems or process parameters as described in the specification, for these parameters may of course vary. It is to be further understood that the terminology used herein is for the purpose of describing particular embodiments of the disclosure only, and is not intended to limit the scope of the disclosure in any manner for the disclosure in any manner.

It must be further noted that as used in this specification and the appended Claims, the singular forms "a," "an," and "the" include the plural referents unless the context clearly dictates otherwise. Thus, for example, reference to "absorbant particle" includes two or more such particles. In addition, the term "about" as used herein and the appended Claims is intended to indicate a range of values of 10% greater and lesser than the indicated value. Thus, about 5% is intended to encompass a range of values from 4.5% to 5.5%.

The term "moisture content" as used herein and the appended Claims is defined on a per weight basis. For example, a moisture content of 20% means within a 100 pounds of material, 20 pounds will be water.

The term "mesh" or "Mesh U.S. Sieve Series" as used herein and in the appended Claims is defined by ASTM E-11 U.S.A. Standard testing Seives.

Unless defined otherwise, all technical and scientific terms have the same meaning as commonly understood by one of ordinary skill in the art to which the disclosure pertains. Although a number of methods and materials similar or equivalent to those described herein can be used in the practice of the present disclosure the preferred materials and methods are described herein.

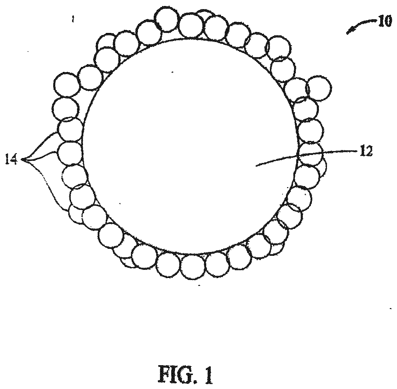

The present disclosure concerns a product that absorbs moisture and a method for making the absorbant product. The product has a non-swelling seed particle coated with a swelling agent. Figure 1 shows an absorbent particle 10. In one embodiment, absorbent particle 10 is utilized as an animal litter. In one embodiment, the animal litter is utilized for at least a dog, a cat, a hamster, a guinea pig, a ferret, a rabbit, and livestock. In another embodiment, absorbent particle 10 is a clumping animal litter. A clumping animal litter, as known in the industry, is a litter product where particles agglomerate or clump upon contact with an aqueous liquid such as urine. Clumping litter is desirable because it allows the consumer to separate and remove urine-soaked litter granules and provides a cost savings to the consumer because the entire litter does not have to be replaced. In one embodiment, absorbant particle 10 is spherical in shape. The shape shown is by way of example only as it is contemplated that a host of shapes and sizes of coated particles can be produced by the embodiments and processes described herein.

Referring to Figure 1 , absorbant particle 10 includes a non-swelling seed particle 12 coated by a swelling agent 14. The term "non-swelling" means when a particle absorbs moisture, it will not swell, expand, or increase in size or volume greater than twice the original dry volume. The term "swelling" means that a particle enlarges in size and volume when it absorbs moisture. For example, it is known in the industry that swelling bentonites contain sodium in the platy molecular structure, which causes the sodium bentonite to be able to typically expand greater than twice its original dry volume. In comparison, calcium bentonite, is known in the industry to be a non-swelling bentonite, because it has a far lower capacity to swell when wet and exhibits greater absorptive characteristics compared to sodium bentonite. In the context of this disclosure, a swelling particle will increase in size or volume greater than the non-swelling particle when exposed to an aqueous liquid. In one embodiment, the aqueous liquid is urine. Non-swelling seed particle 12 includes an agglomeration of particulate fines 36, where particulate fines 36 are selected at least from a group consisting of clay, quartz, feldspar, calcium bentonite, calcite, Illite, calcium carbonate carbon mica, Georgia White clay, hectorite, zeolite, smectite, opal, kaolinite, pumice, calcite, tobermite, slate, gypsum, vermiculite, halloysite, sepiolite, marls, diatomaceous earth, dolomite, attapulgite, montmorillonite, monterey shale, Fuller's earth, silica, fossilized plant materials, perlites, and expanded perlites and mixtures thereof. In one embodiment, particulate fines 36 have a moisture content less than about 20%, preferably less than about 16%. The individual particulate fines 36 range in size from about 325 mesh to about 40 mesh. Once agglomerated, in one embodiment, seed particle 12 has a size range of about 50 mesh to about 6 mesh. In an embodiment, the clay particles have a size of -8 to +50 mesh. Non-swelling seed particle 12 has a moisture content ranging from about 20% to about 40%. In another embodiment, seed particle 12 comprises an agglomeration of non-swelling particles and swelling particles. The material used for the swelling particles is chosen from the group of swelling agents 14.

Swelling agent 14 is selected from at least one of a sodium bentonite, a calcium bentonite, a guar gum, a starch, a xanthan gum, a gum Arabic, a gum acacia, and a silica gel, other minerals or a mixture thereof. In one embodiment, swelling agent 14 is a powder having a moisture content of less than 20%. In a further embodiment, swelling agent 14 is a powdered bentonite having a particle size distribution such that 90% of the particles pass through 100 Mesh. In yet another embodiment, swelling agent 14 is a spray solution. In one embodiment, the spray solution includes at least 5% bentonite, up to 10% swelling agent, and 90% water. In still another embodiment, swelling agent 14 includes an odor control agent, an anti-microbial agent, an anti-sticking agent, an agent for controlling pH, a coloring agent, a de-dusting agent, a disinfectant, or combinations thereof. In a further embodiment, swelling agent 14 is a particle that can be agglomerated.

Non-swelling seed particle 12 is coated by swelling agent 14. For example, swelling agent 14 forms a coating that surrounds and enrobes non-swelling seed particle 12. A coating is defined to mean a discrete, homogeneous layer that is individually distinct from seed particle 12. Thus, in one embodiment, the coating is a discrete homogeneous layer of bentonite powder that wholly surrounds or enrobes seed particle 12.

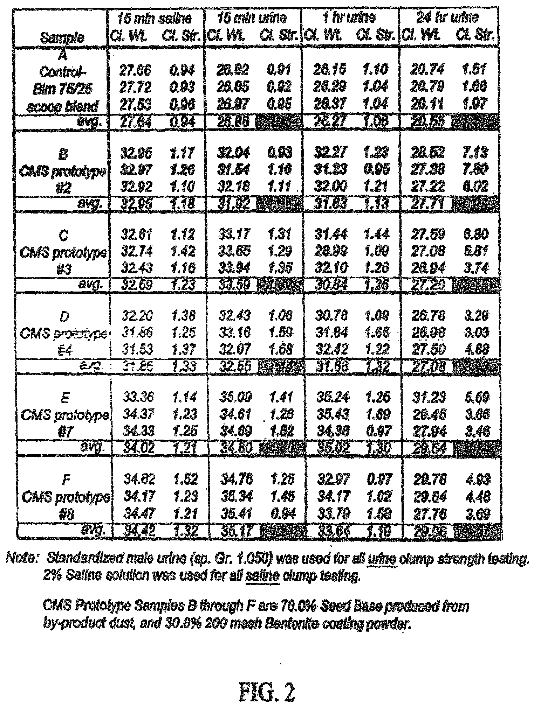

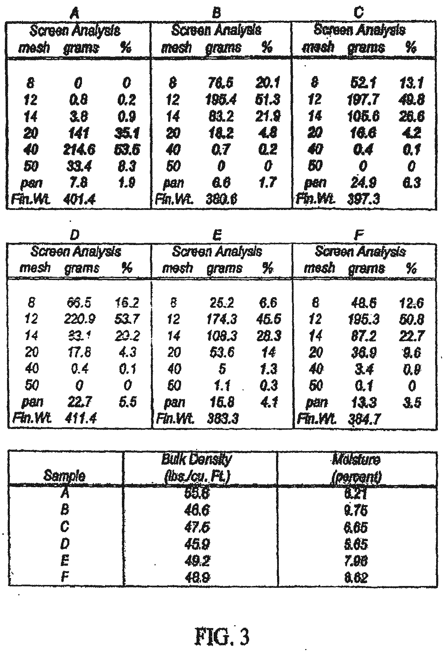

Figures 2 and 3 are an analysis of several samples of coated clamping litter, which includes 70% by weight particles produced from particulate fines 36 as described above and 30% weight swelling agent 14. Figure 2 illustrates clumping weight and clumping strength for several representative samples and is charted based upon wetting, for example, 15 minutes after wetting with a saline solution, and for 15 minutes, one hour, and 24 hours after being wetted with a standard urine sample. Figure 3 shows a screen analysis, a bulk density, and a moisture content for each sample analyzed in Figure 2 . The screen analysis indicates a weight and a percentage for each sample that passed through standard mesh screens, for example, 8, 12, 14, 20, 40, and 50 mesh screens. It can be concluded from the data shown in Figure 3 that as the size of the clump increases the stronger is the clump.

Furthermore, the data supports the fact that a decreased level of bentonite, e.g., at 30%, does not decrease the litter's ability to clump. When a plurality of absorbant particles 10 are exposed to urine, they adhere to one another or clump. In one embodiment absorbant particles 10 have a coating of sodium bentonite powder on the surface of non-swelling particles 12. The sodium bentonite powder, in one embodiment, is about 200 mesh, e.g. the consistency of fine baby powder. However, the sodium bentonite powder is composed of individual particles. When two or more absorbant particles 10 are exposed to urine, the sodium bentonite powder swells. As the sodium bentonite swells, there is a bonding interaction that occurs between the individual sodium bentonite powder particles on the surface of the two absorbant particles 10. This bonding interaction causes the absorbant particles 10 to adhere or clump. As a result, this surface-to-surface bonding interaction of the swollen sodium bentonite powder allows absorbant particles 10 to clump as strong as an animal litter composed of pure bentonite

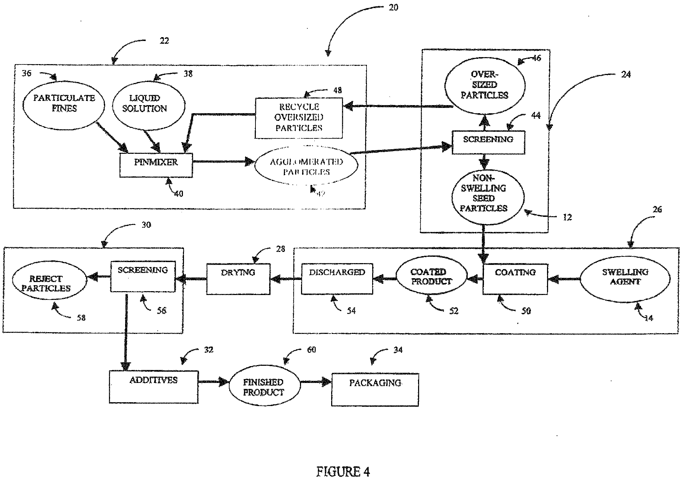

Figure 4 shows a process 20 to produce absorbant particle 10. Process 20 includes the steps of: agglomerating 22 the initial seed material; screening 24 the moist seed particles; coating 26 seed particles with a swelling agent; drying 28 the coated seed particles; screening 30 the dried coated seed particles; addition of additives 32; and packaging 34.

Agglomerating 22 includes using a pinmixer 40 to mix particulate fines 36 witjh a liquid solution 38 to produce agglomerated particles 42. One specific embodiment includes recovery of waste fines that include Calcium-Montmorillonite, smectite, attapulgite, kaolin, opal and combinations thereof. In one embodiment, particulate fines 36 range in size from about 325 mesh to about 40 mesh. Particulate fines 36 are metered into pinmixer 36 at a known rate. In one embodiment, liquid solution 38 acts as a binder to particulate fines 36 and is metered into pinmixer 40. In one embodiment, liquid solution 38, applied to pinmixer 40, ranges from about 20% to about 40% by weight. In one embodiment, liquid solution 38 is water. In another embodiment, liquid solution 38 includes functional components, examples being: color, fragrance, and liquid calcium. In yet another embodiment, liquid solution 38 comprises a mixture of water and a binding agent. The binding agent is selected from a group consisting of guar gum, alginates, xanthan gum, gum acacia, gum Arabic, lignin sulfonate, carboxymethyl-cellulose, hydroxyethyl-cellulose, hydroxypropylcellulose, ethylhydroxyethyl-cellulose, methylhydroxyethyl-cellulose, and methylhydroxypropyl-cellulose. In one embodiment, liquid solution 38 consists of up to 10% binder and at least 90% water by weight. In another embodiment, liquid solution 38 includes water, functional components, and a binding agent.

The more moisture that is added will increase the resulting size of agglomerated particle 42. Conversely, the less moisture added, will result in a smaller size agglomerated particle 42. Preferably, the moisture added as a binder should be in the range from about 28% to about 32%. Further, the speed at which the shaft of pinmixer 40 spins affects the size of agglomerated particle 42: the greater the RPM of the shaft, the smaller the resulting agglomerated particle 42. The agglomerated fines have a moisture content ranging from about 20% to about 40%. In another embodiment, the fines have a moisture content ranging from about 28% to about 34%. Pinmixer 40 is commercially available from FEECO International, Green Bay, Wisconsin. Pinmixer 40 is a long, cylindrical chamber having a rotating shaft which extends axially down the center of the chamber. The rotating shaft has a plurality of metal pins attached that extend from the center of the axis vertically outward. These pins are located in a spiral pattern, running the length of the shaft. Along the cylindrical chamber are nozzles that inject liquid solution 38. As the shaft rotates within the cylindrical chamber, the pins create a horizontal vortex that imparts pressure. The pressure in combination with liquid solution 38 as a binder agglomerates the particulate fines 36 into a cake (not shown). The pins on the shaft of pinmixer 40 break up the cake into spherically shaped agglomerated particles 42. The resulting agglomerated particles 42 range from about 50 mesh to about 4 mesh in size.

By screening 24 agglomerated particles 42 a cost savings is provided: the amount of swelling agent 14 used for the coating is saved, the actual non-swelling agent, e.g. particulate fines 36, is not wasted, and the energy to coat and dry oversized particles is prevented. In one embodiment, a heated vibrating screen is utilized. Typically, commercially available shaker screens are utilized. Screen 44 needs to be both heated and vibrating so agglomerated particle 42 does not stick to screen 44 and cause screen 44 to become blocked and not functional. Screening 24 eliminates oversized particles 46 from being coated. Typically, oversized particles 46 are greater than 6 mesh in size. Oversized particles 46 are recycled 48 in order to reduce waste. Particles that pass through screen 44 are non-swelling seed particles 12. In one embodiment, non-swelling seed particles 12 range in size from about 50 mesh to about 6 mesh.

After screening 44, a plurality of non-swelling seed particles 12 go through a coating process 26, which includes coating seed particles 12 with a swelling agent 14. Methods for coating 50 include utilizing at least one of a centrifugal coater. In another embodiment, a rotary system is utilized, where seed particle 12 and swelling agent 14 are tumbled in a drum. Coating process 26 is a batch process; therefore, material is not continuously fed into coater 50. During each batch, a set amount of seed particles 12 are dropped into coater 50.

In one embodiment, coater 50 works similar to a centrifuge. A batch of seed particles 12 are fed into coater 50 as coater 50 rotates. Seed particles 12 roll inside the chamber of coater 50 in the direction of rotation. Swelling agent 14 is metered into coater 50. As swelling agent 14 is metered into the chamber, it follows the path of the rolling seed particles 12. As seed particles 12 rotate, they are diverted by two plates, located 180 degrees apart within the chamber. These plates divert seed particles 12 toward the center of the chamber before centrifugal force forces them back to the walls of the chamber. This action aids in coating seed particle 12 with swelling agent 14 to results in a better coating utilizing less bentonite.

In one embodiment swelling agent 14 is a swelling clay powder. In another embodiment, swelling agent is sodium bentonite powder. In a still further embodiment, swelling agent is a mixture of sodium bentonite powder and guar gum. In a further embodiment, coating powders include at least one of a sodium bentonite powder and a blended powder comprising sodium bentonite and guar gum. As swelling agent 14 contacts seed particle 12, the moisture of seed particle 12 causes swelling agent 14 to swell or gelatinize and adhere to seed particle 12. As seed particle 12 rolls around the chamber, swelling agent 14 adheres to the surface of seed particle 12 to form a discrete coating.

Once a uniform coating has been applied, the coated article (not shown) is allowed to continue to roll within the chamber to allow swelling agent 14 to become compressed or packed around seed particle 12 becoming a coated particle 52. In one embodiment, the coating is about 5% to about 40% by weight of coated particle 52. In an alternative embodiment, the coating is a sodium bentonite coating that is about 20% to about 35% by weight of coated particle 52. In a further embodiment, the coating is a sodium bentonite coating that is 30% by weight of coated particle 52. In one embodiment, the coating is a silica and sodium bentonite coating that is about 30% to about 40% by weight of coated product 52. In yet another embodiment, the coating is a sodium bentonite powder and guar gum coating that is about 15% to about 25% by weight of coated product 52. Once coated, coated particle 52 is discharged 52, as a batch, through a side ejection hatch (not shown) via centrifugal force, and the process is repeated.

In an alternative method, agglomerated particles 42 are placed in a fluidized bed and a bentonite coating is sprayed in a dilute concentration solution to produce coated particle 52. In one embodiment the dilute solution comprises less than 5% bentonite and 95% water.

After being discharged 52, coated product 52 is transferred to a dryer 28. Drying 28 removes moisture from the coated particle without removing swelling agent 14 or damaging finished product 52. Drying 28 can be accomplished by a variety of commercially available dryer technologies. In one embodiment, a rotary drum dryer is utilized. In another embodiment, a fluidized bed dryer is utilized. Typically, in one embodiment, coated product 52 is dried to have a moisture content less than 30%. This can be accomplished by heating coated product 52 in the range of about 200° to about 800° Fahrenheit. More specifically, coated product 52 is heated to about 300° to about 400° Fahrenheit. In another embodiment, coated product 52 is dried to have a moisture content ranging from about 15% to about 25%; and in yet another embodiment a moisture content ranging from about 6% to about 12%. An over-dried product has a moisture content of less than 5%. At 5%, performance begins to degrade because the ability of bentonite to absorb water and swell is reduced. This degredation decreases the ability of the litter to clump, which affects the strength of the overall clump.

After drying process 28, another screening process 30 takes place. This step uses a vibrating screen 54 to remove coated particles larger than a mesh size of about) 8. Particles larger than a mesh size of about 8 detrimentally affect product performance because these larger particles allow moisture to channel more easily through the litter. As known in the art, channelling occurs when urine penetrates readily through the litter resulting in a long, thin clump that runs from the top of the litter bed to the bottom of the litter pan. If the urine can easily pass all the way through the litter then a sticky clump or residue can form on the bottom of the pan underneath the actual litter. Channelling results in clumps that are irregular and difficult to remove. Further, such clumps are more susceptible to breakage during removal. In one embodiment, the resulting finished product 60 has a range of about 8 mesh to about 50 mesh in size. In one embodiment finished product 60 has a moisture content from about 5% to about 15%. In another embodiment, finished product 60 has a moisture content of about 6% to about 10%. In a specific embodiment, finished product 60 has a moisture content of about 8%.

Once a uniform size of coated particles has been established, additives 32 are applied. Additives 32 includes an odor control agent, a fragrance, an anti-microbial agent, an anti-sticking agent, an agent for controlling pH, a powder for coloring, a dye, a coloring agent, addition of colored particles, a de-dusting agent, a disinfectant, or combinations thereof. In one embodiment, the coated particles are further coated with a colorant. A finished product 60 consists of a mixture of colored particles and non-colored particles. In one embodiment, up to 5% w/w of the coated particles are colored. Once additives 32 are include, the product is ready to be packaged 34. The animal litter resulting from the compositions and methods described above has superior clumping properties as the active clumping agent, e.g. swelling agent 14, is kept on the surface of the particles, where the clumping bonds are formed. In addition, the litter has a dust content, e.g., particles sized less than about 60 mesh are 'dust', which is lower than known clumping litters. The drying process removes the majority of particles sized under about 60 mesh.

In the above described embodiments, coating with swelling agent 14 provides a litter which includes the clumping and absorption qualities of a litter which is composed solely of sodium bentonite. However, due to the process 20 that produces absorbant particle 10, the amount by weight of a swelling agent utilized is reduced over known clumping litters. In one embodiment, this results in more efficient use of the sodium bentonite while providing a production cost savings over those litters with higher percentage amounts of sodium bentonite. In addition, the coated litter produced provides a lighter weight product compared to products manufactured with 100% sodium bentonite. Further the coated litter has a unique, homogeneous appearance that appeals to consumers. Further, agglomeration process 22 results in a utilization of clay product fines 36, which heretofore have been considered waste products, and since clay is not biodegradable, clay fines have traditionally required space for disposal.

## Claims

1. An animal litter comprising:
non-swelling particles having a size range of about 297 microns (50 mesh) to about 2000 microns (10 mesh), said non-swelling particles being an agglomeration of particulate fines selected from the group consisting of clay, quartz, feldspar, calcium bentonite, calcite, illite, calcium carbonate, carbon, mica, Georgia white clay, hectorite, zeolite, smectite, opal, kaolinite, pumice, tobermite, slate, gypsum, vermiculite, halloysite, sepiolite, marls, diatomaceous earth, dolomite, attapulgite, montmorillonite, Monterey shale, Fuller's earth, silica, fossilized plant materials, perlites, expanded perlites, and mixtures thereof,
whereby the individual particulate fines range in size from about 44 microns (325 mesh) to about 420 microns (40 mesh); and
a swelling agent having a size range of about 49 microns (300 mesh) to about 250 microns (60 mesh) coated on said non-swelling particles, said swelling agent is selected from the group consisting of bentonite, sodium bentonite, calcium bentonite, guar gum, starch,
grantham gum, gum Arabic, gum acacia, silica gel, and mixtures thereof,
wherein the animal litter is obtainable by the process steps of:
(i) mixing particulate fines of the non-swelling particles using a pinmixer with a liquid solution to produce agglomerated particles,
(ii) screening the agglomerated particles to result non-swelling seed particles,
(iii) coating the seed particles with a swelling agent to produce a coated product,
(iv) discharging the coated particles,
(v) drying the coated product and
(vi) screening the coated product using a vibrating screen to remove particles larger than 2380 microns (8 mesh).

2. An animal litter according to claim 1 wherein said non-swelling particles comprise clay; optionally wherein said clay comprise at least one component selected from the group consisting of Calcium-Montmorillonite, smectite, attapulgite, halloysite, kaolin, and opal fines.

3. An animal litter according to claim 1 or 2 wherein said swelling agent
(i) is a powder; and/or
(ii) has a particle size distribution such that at least 90% of the particles pass through 149 microns (100 mesh); and/or
(iii) is about 20% to about 40 % by weight; and/or
(iv) is a spray solution; optionally said spray solution comprises water and the swelling agent.

## Patentansprüche

1. Tiereinstreu, umfassend:
nichtquellende Partikel mit einem Größenbereich von etwa 297 Mikrometer (50 Mesh) bis etwa 2000 Mikrometer (10 Mesh), wobei die nichtquellenden Partikel eine Agglomeration von Partikelfeinstoffen sind, ausgewählt aus der Gruppe bestehend aus Ton, Quarz, Feldspat, Calciumbentonit, Calcit, Illit, Calciumcarbonat, Kohlenstoff, Glimmer, weißem Georgiaton, Hectorit, Zeolith, Smectit, Opal, Kaolinit, Bimsstein, Tobermit, Schiefer, Gips, Vermiculit, Halloysit, Sepiolith, Marl, Diatomeenerde, Dolomit, Attapulgit, Montmorillonit, Montereyschiefer, Fullererde, Kieselerde, fossilierten Pflanzenmaterialien, Perliten, expandierten Perliten und Mischungen davon, wobei die Größe der einzelnen Partikelfeinstoffe im Bereich von etwa 44 Mikrometer (325 Mesh) bis etwa 420 Mikrometer (40 Mesh) liegt; und
ein Quellmittel mit einem Größenbereich von etwa 49 Mikrometer (300 Mesh) bis etwa 250 Mikrometer (60 Mesh), mit dem die nichtquellenden Partikel beschichtet sind, wobei das Quellmittel ausgewählt ist aus der Gruppe bestehend aus Bentonit, Natriumbentonit, Calciumbentonit, Guargummi, Stärke, Granthamgummi, Gummi arabicum, Akaziengummi, Silicagel und Mischungen davon,
wobei die Tiereinstreu durch die folgenden Verfahrensschritte erhältlich ist:
(i) Mischen von Partikelfeinstoffen der nichtquellenden Partikel unter Verwendung eines Stiftmischers mit einer flüssigen Lösung, um agglomerierte Partikel herzustellen,
(ii) Sieben der agglomerierten Partikel, um nichtquellende Saatpartikel zu ergeben,
(iii) Beschichten der Saatpartikel mit einem Quellmittel, um ein beschichtetes Produkt herzustellen,
(iv) Entladen der beschichteten Partikel,
(v) Trocknen des beschichteten Produkts und
(vi) Sieben des beschichteten Produkts unter Verwendung eines Vibrationssiebs, um Partikel zu entfernen, die größer als 2380 Mikrometer (8 Mesh) sind.

2. Tierstreu nach Anspruch 1, wobei die nichtquellenden Partikel Ton umfassen; wobei der Ton wahlweise mindestens eine Komponente umfasst, die ausgewählt ist aus der Gruppe bestehend aus Calcium-Montmorillonit, Smektit, Attapulgit, Halloysit, Kaolin und Opalfeingut.

3. Tierstreu nach Anspruch 1 oder 2, wobei das Quellmittel
(i) ein Pulver ist; und/oder
(ii) eine solche Partikelgrößenverteilung aufweist, dass mindestens 90 % der Partikel durch 149 Mikrometer (100 Mesh) hindurchgehen; und/oder
(iii) etwa 20 Gew.-% bis etwa 40 Gew.-% beträgt; und/oder
(iv) eine Sprühlösung ist; wahlweise umfasst die Sprühlösung Wasser und das Quellmittel.

## Revendications

1. Litière pour animaux comprenant :
des particules non gonflantes ayant une plage de taille d'environ 297 micromètres (50 mesh) à environ 2000 micromètres (10 mesh), lesdites particules non gonflantes étant une agglomération de fines particulaires choisies dans le groupe constitué d'argile, quartz, feldspath, bentonite de calcium, calcite, illite, carbonate de calcium, carbone, mica, argile blanche de Géorgie, hectorite, zéolite, smectite, opale, kaolinite, pierre ponce, tobermorite, ardoise, gypse, vermiculite, halloysite, sépiolite, marnes, terre à diatomées, dolomite, attapulgite, montmorillonite, schiste de Monterey, terre de Fuller, silice, matières végétales fossilisées, perlites, perlites expansées, et des mélanges de ceux-ci, moyennant quoi les fines particulaires individuelles vont en taille d'environ 44 micromètres (325 mesh) à environ 420 micromètres (40 mesh) ; et
un agent gonflant ayant une plage de taille d'environ 49 micromètres (300 mesh) à environ 250 micromètres (60 mesh) revêtu sur lesdites particules non gonflantes, ledit agent gonflant est choisi dans le groupe constitué de bentonite, bentonite de sodium, bentonite de calcium, gomme de guar, amidon, gomme de grantham, gomme arabique, gomme d'acacia, gel de silice, et des mélanges de ceux-ci,
dans laquelle la litière pour animaux peut être obtenue par les étapes de procédé consistant à :
(i) mélanger des fines particulaires des particules non gonflantes en utilisant un pétrin à tiges avec une solution liquide pour produire des particules agglomérées,
(ii) cribler les particules agglomérées pour donner des particules d'ensemencement non gonflantes,
(iii) revêtir les particules d'ensemencement avec un agent gonflant pour produire un produit revêtu,
(iv) décharger les particules revêtues,
(v) sécher le produit revêtu et
(vi) cribler le produit revêtu en utilisant un crible vibrant pour éliminer les particules plus grandes que 2380 micromètres (8 mesh).

2. Litière pour animaux selon la revendication 1 dans laquelle lesdites particules non gonflantes comprennent de l'argile ; facultativement dans laquelle ladite argile comprend au moins un composant choisi dans le groupe constitué de montmorillonite de calcium, smectite, attapulgite, halloysite, kaolin, et fines d'opale.

3. Litière pour animaux selon la revendication 1 ou 2, dans laquelle ledit agent gonflant
(i) est une poudre ; et/ou
(ii) a une distribution granulométrique telle qu'au moins 90 % des particules passent à travers 149 micromètres (100 mesh) ; et/ou
(iii) va d'environ 20 % à environ 40 % en poids ; et/ou
(iv) est une solution de pulvérisation ; facultativement ladite solution de pulvérisation comprend de l'eau et l'agent gonflant.
